# EUROPEAN PATENT APPLICATION

(11) **EP 4 734 204 A1**
(43) Date of publication of application: **29.04.2026**
(21) Application number: 24825914.5
(22) Date of filing: 19.06.2024
(51) Int. Cl.: H01M 10/052, H01M 10/058, H01M 50/443, H01M 50/451, H01M 50/474, H01M 50/477, H01M 50/483, H01M 50/486

(54) **LITHIUM SECONDARY BATTERY AND COMPOSITE MEMBER**

(30) Priority: 22.06.2023 JP 2023102795
(71) Applicant: Panasonic Intellectual Property Management Co., Ltd., Kadoma-shi, Osaka 571-0057 (JP)
(72) Inventor: OKIMOTO, Rikiya, Kadoma-shi, Osaka 571-0057 (JP); MIYAMAE, Ryohei, Kadoma-shi, Osaka 571-0057 (JP); SAKATA, Hiroki, Kadoma-shi, Osaka 571-0057 (JP)
(74) Representative: Eisenführ Speiser
(86) International application number: PCT/JP2024/022152
(87) International publication number: WO 2024/262513

(57) **Abstract**

A lithium secondary battery includes a positive electrode, a negative electrode facing the positive electrode, a separator provided between the positive electrode and the negative electrode, and a nonaqueous electrolyte. The separator has a first main surface. The lithium secondary battery further includes a spacer layer provided on the first main surface of the separator. The spacer layer contains a resin and a filler. The spacer layer includes a first layer provided closest to the first main surface in a height direction intersecting the first main surface, and a second layer in contact with the first layer in the height direction. The ratio R₁/R₂ is greater than 1, where R₁ represents the area ratio of the filler contained in the first layer, and R₂ represents the area ratio of the filler contained in the second layer, both calculated based on a cross-section of the separator taken along the height direction.

## Description

### [Technical Field]

The present disclosure relates to a lithium secondary battery including a nonaqueous electrolyte having lithium ion conductivity.

### [Background Art]

Nonaqueous electrolyte secondary batteries are used for ICT devices such as personal computers and smartphones, for automotive applications, and for energy storage applications. In such applications, the nonaqueous electrolyte secondary batteries are demanded to have even higher capacity. As a nonaqueous electrolyte secondary battery having high capacity, a lithium-ion battery is known. High capacity of the lithium-ion battery can be achieved, for example, by combinational use of graphite and an alloy active material such as a silicon compound, as negative electrode active materials. However, the capacity increase of the lithium-ion batteries is reaching its limit.

Lithium secondary batteries (lithium-metal secondary batteries) are promising high-capacity nonaqueous electrolyte secondary batteries surpassing the lithium-ion batteries. In a lithium secondary battery, lithium metal is deposited on the negative electrode during charging, and the lithium metal is dissolved in the nonaqueous electrolyte during discharging.

It has been attempted to improve charge-discharge efficiency and suppress cracking of the negative electrode current collector due to local expansion of the negative electrode in the lithium secondary batteries by ensuring a space in which lithium metal is deposited during charging through provision of a spacer (protrusions) between the separator and the positive electrode or the negative electrode (e.g., Patent Literature 1).

Patent Literature 2 proposes a separator for use in a nonaqueous electrolyte battery, including a substrate and a plurality of protrusions in a pattern on at least one main surface of the substrate, wherein the substrate includes one or more layers, and a value of T1/T2 is 0.3 or more, where T1 represents a distance between the substantially flat plane formed at the tops of the protrusions in the pattern and the substantially flat plane formed at the bottoms of the protrusions of the pattern, and T2 represents the total thickness of the separator. According to Patent Literature 2, a nonaqueous electrolyte battery can be provided that suppresses winding misalignment of a stack or wound body including electrodes and a separator and that is excellent in lifetime characteristics and safety.

### [Citation List]

### [Patent Literature]

[Patent Literature 1] International Publication No. 2020/066254
[Patent Literature 2] International Publication No. 2020/004205

### [Summary of Invention]

### [Technical Problem]

When the pattern of the protrusions is formed on the substrate of the separator by printing or coating, a resin and a solvent (dispersion medium) permeate into the substrate during printing or coating. When the resin and the solvent permeate in the substrate are dried thereafter, the substrate may wrinkle. As a result, displacement of the protrusions may occur after formation of the stack or wound body, so that a space by the protrusions cannot be ensured and cycle characteristics may be decreased.

### [Solution to Problem]

One aspect of the present disclosure relates to a lithium secondary battery including a positive electrode; a negative electrode facing the positive electrode; a separator provided between the positive electrode and the negative electrode, and a nonaqueous electrolyte, wherein in the negative electrode, lithium metal is deposited during charging, and the lithium metal is dissolved during discharging, the separator has a first main surface, the secondary battery further comprises a spacer layer provided on the first main surface of the separator, the spacer layer contains a resin and a filler, the spacer layer includes a first layer provided closest to the first main surface in a height direction intersecting the first main surface, and a second layer in contact with the first layer in the height direction, and a ratio R₁/R₂ is greater than 1, where R₁ represents an area ratio of the filler contained in the first layer, and R₂ represents an area ratio of the filler contained in the second layer, both calculated based on a cross-section of the spacer layer taken along the height direction.

Another aspect of the present disclosure relates to a composite member including: a separator having a first main surface; and a spacer layer provided on the first main surface of the separator, wherein the spacer layer contains a resin and a filler, the spacer layer includes a first layer provided closest to the first main surface in a height direction intersecting the first main surface, and a second layer in contact with the first layer in the height direction, and a ratio R₁/R₂ is greater than 1, where R₁ represents an area ratio of the filler contained in the first layer, and R₂ represents an area ratio of the filler contained in the second layer, both calculated based on a cross-section of the spacer layer taken along the height direction.

### [Advantageous Effects of Invention]

According to the present disclosure, a decrease in cycle characteristics of a lithium secondary battery can be suppressed.

While the novel features of the invention are set forth particularly in the appended claims, the invention, both as to organization and content, will be better understood and appreciated, along with other objects and features thereof, from the following detailed description taken in conjunction with the drawings.

### [Brief Description of Drawings]

[FIG. 1] FIG. 1 is a schematic longitudinal cross-sectional view of a lithium secondary battery according to an embodiment of the present disclosure.
[FIG. 2] FIG. 2 is a schematic enlarged view of the main components of the lithium secondary battery of FIG. 1.
[FIG. 3] FIG. 3 is a schematic plan view of an example of the composition of a spacer layer provided on the surface of a separator in the lithium secondary battery according to an embodiment of the present disclosure.
[FIG.4] FIG. 4 is a schematic cross-sectional view of the internal structure of the spacer layer.

### [Description of Embodiments]

Embodiments of the present disclosure are described below by way of examples, but the present disclosure is not limited to the examples described below. In the following description, specific numerical values and materials may be exemplified in some cases, but other numerical values and other materials may be adopted as long as the effects of the present disclosure can be obtained. Note that known components may be applied to portions other than the characteristic portions of the present disclosure. In the present description, the phrase "a numerical value A to a numerical value B" means to include the numerical value A and the numerical value B. In the following description, when the lower and upper limits of numerical values related to specific physical properties, conditions, or the like are mentioned as examples, any of the mentioned lower limits and any of the mentioned upper limits can be combined in any combination as long as the lower limit is not equal to or more than the upper limit. When a plurality of materials are mentioned as examples, one type of them may be selected and used singly, or two or more types of them may be used in combination.

The present disclosure encompasses a combination of matters recited in any two or more claims selected from multiple claims in the appended claims. In other words, as long as no technical contradiction arises, matters recited in any two or more claims selected from multiple claims in the appended claims can be combined.

A lithium secondary battery according to an embodiment of the present disclosure includes a positive electrode, a negative electrode facing the positive electrode, a separator provided between the positive electrode and the negative electrode, and a nonaqueous electrolyte. The positive electrode and the negative electrode may be wound with the separator therebetween to form an electrode group having multiple turns. The positive electrode and the negative electrode may be stacked with the separator therebetween to form a stack. The lithium secondary battery is a secondary battery in which lithium metal is deposited on the negative electrode during charging and the lithium metal is dissolved from the negative electrode during discharging.

The lithium secondary battery exhibits, for example, 70% or more of the rated capacity through deposition and dissolution of lithium metal. Electron transfer in the negative electrode during charging and discharging is mainly due to deposition and dissolution of lithium metal in the negative electrode. Specifically, 70 to 100% (e.g., 80 to 100% or 90 to 100%) of the electron transfer (current in another respect) in the negative electrode during charging and discharging is due to deposition and dissolution of lithium metal. That is, the negative electrode of the lithium secondary battery differs from a negative electrode in which electron transfer during charging and discharging is mainly due to absorption and release of lithium ions by a negative electrode active material (e.g., graphite).

The separator has a first main surface and a second main surface located on the opposite side to the first main surface. The first main surface and the second main surface are the surfaces that face the positive electrode and the negative electrode, respectively, in the lithium secondary battery. A spacer layer is provided on the first main surface of the separator. The spacer layer is a set of protrusions arranged on a surface of the separator, and is provided on at least the first main surface of the separator. The first main surface may be the surface facing the positive electrode or the surface facing the negative electrode. The spacer layer (protrusions) may be provided on both the first and second main surfaces.

The separator may be composed of only the later-described base layer, or may be composed of a plurality of layers including the base layer and, for example, the later-described composite material layer. When the separator is composed of only the base layer, the first main surface and the second main surface of the separator are synonymous with the first main surface and the second main surface of the base layer, respectively, and the spacer layer is provided on the first main surface of the base layer. When the separator is composed of a plurality of layers, one of the surfaces of the separator facing the positive electrode and the negative electrode is the first main surface and the other is the second main surface. The spacer layer may be formed on the surface of the composite material layer, which is one of the plurality of layers. Hereinafter, the separator having the first main surface with the spacer layer provided thereon may be referred to as "composite member".

The spacer layer forms a space between the positive electrode and the separator or between the negative electrode and the separator. The spacer layer ensures a space in which lithium metal is deposited on the surface of the negative electrode to reduce the volume change of the negative electrode due to the deposition of the lithium metal. The space suppresses expansion of the negative electrode due to charging and discharging to suppress a decrease in cycle characteristics.

The spacer layer contains a resin and a filler. The spacer layer containing a resin and a filler can be formed on the first main surface, for example, by printing or applying a solution or dispersion liquid, in which the resin and the filler are dissolved or dispersed in a solvent, to form a base layer of the separator, and removing the solvent then by drying.

Incidentally, when the solution or dispersion liquid is printed on or applied to the first main surface of the separator, the solvent and the resin permeate into the pores of the separator. The solvent permeated in the separator is removed by drying. However, the separator may shrink at that time to form wrinkles. As a result, a displacement of the protrusions tends to occur once the stack or wound electrode group is formed. This may involve insufficient exertion of the space forming effect by the protrusions and the resulting effect of suppressing a decrease in cycle characteristics.

The spacer layer includes a first layer provided closest to the first main surface in a height direction intersecting the first main surface, and a second layer in contact with the first layer in the height direction. The ratio R₁/R₂ is greater than 1, where R₁ represents the area ratio of the filler in the first layer, and R₂ represents the area ratio of the filler in the second layer. Here, both R₁ and R₂ are calculated based on a cross-section taken along the height direction of the separator. As a result of the above setting, the permeation of the solvent in forming the spacer layer on the surface of the separator is suppressed to suppress the base layer contraction and the wrinkles formation. Thus, the space forming effect by the protrusions of the spacer layer can be maintained high, and a decrease in cycle characteristics can be effectively suppressed.

The first layer and the second layer have different area ratios of the filler. However, it is not necessary that there is a clear difference in area ratio between the first layer and the second layer, with the interface therebetween serving as the boundary. It is only necessary to provide a distribution in which the area ratio decreases from the first layer toward the second layer (i.e., as the distance from the first main surface increases).

The first layer is a region of the spacer layer provided closest to the first main surface. When the solution or dispersion liquid is printed on or applied to the first main surface of the base layer, the solvent permeates into the pores of the separator through the first layer. When the content percentage of the filler in the first layer is set higher than that in the second layer, the solvent and the resin hardly permeate from the first layer to the separator, and separator contraction and wrinkle formation after drying and removal of the solvent are suppressed. As a result, the space forming effect by the protrusions of the spacer layer can be maintained high, and a decrease in cycle characteristics can be effectively suppressed.

The first layer should have a region of the spacer layer near the first main surface, and the thickness thereof in the height direction may be relatively thin. The thickness of the first layer depends on the thickness of the entirety of the spacer layer, but may be as small as 2 µm. When the thickness of the first layer is 2 µm or more, sufficient effect of suppressing permeation of the solvent and the resin to the base layer can be achieved.

The thickness of the first layer may be 2 µm or more. However, the thickness of the first layer may be smaller than 2 µm as long as it is 0.05T or more, where T represents the total thickness of the spacer layer in the height direction.

The second layer is a region of the spacer layer in direct contact with the first layer in the height direction. The second layer may occupy the entire portion of the spacer layer other than the first layer, or may be a part of the portion of the spacer layer other than the first layer. In the latter case, the spacer layer includes a third layer facing the first layer with the second layer therebetween while in contact with the second layer in the height direction. An area ratio R₃ of the filler in the third layer is not particularly limited, and may be smaller than R₂ or larger than R₂.

R₁ and R₂ (and R₃) are calculated in the manner described below based on a cross-section taken along the height direction of the separator.

First, a separator (composite member) with a spacer layer as a measurement target provided thereon is prepared. The prepared composite member is cut so as to cross the spacer layer in the thickness direction of the separator to form a cross-section of the spacer layer. To do so, a cross section polisher (CP) may be used for obtaining the cross-section. When the separator and the spacer layer included in a manufactured lithium secondary battery are to be measured, the composite member may be taken out of the secondary battery in the fully charged state or may be taken out of the secondary battery in a discharged state. The composite member taken out of the secondary battery is washed with an organic solvent such as dimethyl carbonate (DMC) and dried prior to measurement.

Next, using a scanning electron microscope (SEM), the cross-section of the spacer layer on the composite member is observed and a cross-sectional image thereof is obtained. In observation using the SEM, an image of a measurement area of, for example, 100 µm by 100 µm is captured at a magnification of 500 to 3000 times. The outline of each particle of the filler is specified in the cross-sectional image, and the area occupied by each particle of the filler in the cross-section is determined. In the image analysis, the areas may be obtained by binarization by which parts occupied by the filler are colored black (or white), while the other part is colored black (or white) in the cross-sectional image. In a predetermined region of the first layer of the spacer layer, a ratio of the sum of the areas occupied by the individual particles of the filler to the area of the predetermined region is determined and defined as a R₁. In a predetermined region of the second layer of the spacer layer, a ratio of the sum of the areas occupied by the individual particles of the filler to the area of the predetermined region is determined and defined as a R₂.

Alternatively, it is also possible that an area Sf is obtained for each particle of the filler in the cross-sectional image and a diameter Df (Df = 8√(Sf/π³)) of the equivalent sphere having the area Sf as the average cross-sectional area of spheres is obtained from the area Sf to obtain the particle size distribution for the diameters Df. The volume-based particle size distribution of the filler can also be obtained assuming that each particle of the filler is spherical having the diameter Df.

When the boundary between the first layer and the second layer is clear from the cross-sectional image, R₁ is obtained from the area occupied by the filler in the predetermined region determined as the first layer in the cross-sectional image, and R₂ is obtained from the area occupied by the filler in the predetermined region determined as the second layer therein. When the boundary between the first layer and the second layer is not clear from the cross-sectional image, R₁ is obtained from the area occupied by the filler in the predetermined region where the distance from the first main surface is T₁ or less, and R₂ is obtained from the area occupied by the filler in the predetermined region where the distance from the first main surface is T₁ or more and 5T₁ or less, with the smaller one of 0.05T and 2 µm defined as a thickness T₁ of the first layer.

For example, the ratio R₁/R₂ is 1 or more and 10 or less. From the viewpoint of suppressing permeation of the solvent and the resin into the separator, the ratio R₁/R₂ is preferably 1.03 or more and 4.25 or less, and more preferably 1.07 or more and 2.8 or less.

For example, R₁ is 0.7 or more and 0.85 or less. When R₁ is 0.7 or more and 0.85 or less, the solvent permeation when the spacer layer is formed on the surface of the separator is further suppressed, and separator contraction and wrinkle formation are further suppressed. In addition, the adhesion between the separator and the spacer layer is maintained.

For example, R₂ may be 0.3 or more. As a result of R₂ being set to 0.3 or more, the stiffness of the spacer layer is increased when forming the spacer layer on the surface of the separator to achieve stable formation of the spacer layer having a sufficient thickness, and a space for deposition of lithium metal can be sufficiently ensured in the negative electrode. However, if R₂ is excessively large, the flexibility of the spacer layer may decrease, making it difficult to form a wound electrode group. R₂ is preferably 0.8 or less.

A plurality of fillers having different particle diameters may be used in combination. For example, the filler may include a first filler having an average particle diameter of less than 1 µm and a second filler having an average particle diameter of 1 to 10 µm. The first filler having a smaller particle diameter can permeate into the gap between the particles of the second filler. By increasing the content percentage of the first filler in the entire filler, the content percentage of the filler in the spacer layer can be easily increased, and in particular, the area ratio R₁ of the filler in the first layer can be easily increased.

For example, by setting the content percentage of the first filler in the entire filler in the first layer to be larger than the content percentage of the first filler in the entire filler in the second layer, a spacer layer having the area ratio R₁ larger than R₂ can be achieved easily. In this case, the area ratio of the first filler to the sum of the first filler and the second filler contained in the first layer is larger than the area ratio of the first filler to the sum of the first filler and the second filler contained in the second layer in the cross-section of the separator.

The spacer layer including the first layer and the second layer may be formed, for example, by preparing a plurality of solutions or dispersion liquids having different compositions of either or both the resin and the filler, and applying the solutions or dispersion liquids to the first main surface of the separator in multiple times.

In the solution or dispersion liquid, a plurality of fillers containing different constituent materials may be used in combination. In this case, since more of the filler having a higher density tends to move toward the base layer due to its own weight in the printing or application process, a state in which the area ratios of the filler distribute in the height direction of the spacer layer tends to be achieved. Therefore, the area ratio of the filler in the first layer located close to the first main surface is easily controlled to be larger than the area ratio in the second layer.

The spacer layer (protrusions) can be formed in a predetermined pattern on the first main surface of the separator. The spacer layer can be configured with a plurality of protrusions on the surface of the separator, for example, such that the protrusions are continuous in neither a first direction nor a second direction intersecting the first direction. The gaps between the plurality of protrusions allow the liquid electrolyte to circulate. This improves the electrolyte flowability to further suppress a decrease in cycle characteristics.

The plurality of protrusions may be line-shaped protrusions. The plurality of protrusions may be line-shaped protrusions extending in the second direction, which is perpendicular to the winding axis. The line-shaped protrusions may be linear protrusions, curved protrusions, or protrusions including a linear portion and a curved portion.

The plurality of protrusions may be arranged in a staggered manner. A polygonal (e.g., hexagonal) mesh may be formed by the plurality of linear protrusions. From the viewpoint of suppressing the non-uniformity of the space between the negative electrode and the separator, the inner angle of the polygon may be 120° or less.

From the viewpoint of ensuring the minimum space necessary between the negative electrode and the separator, an average height h of the protrusions may be 0.015 mm or more and 0.1 mm or less according to the battery size, or may be 0.02 mm or more and 0.09 mm or less. The average height h of the protrusions is obtained by averaging the measurement values at any ten points.

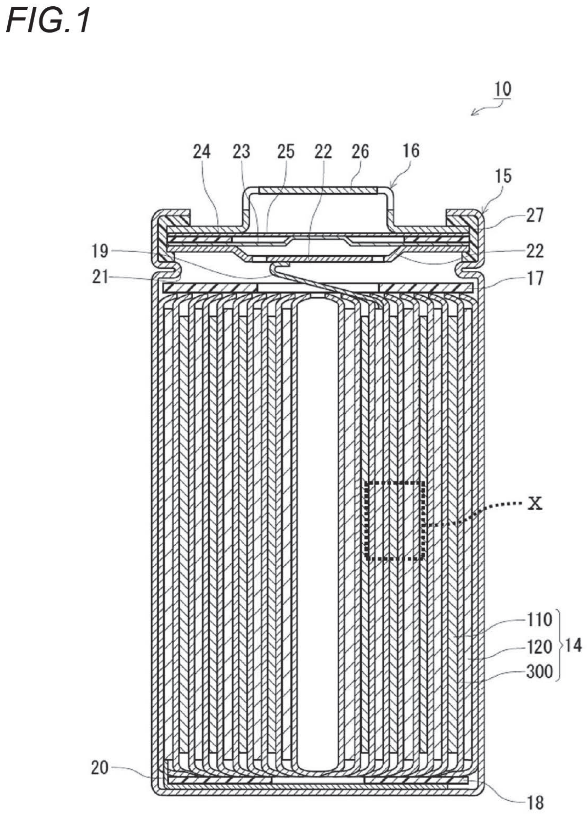

From the viewpoint of improving the flowability of the nonaqueous electrolyte on the surface of the negative electrode, the height of some of the protrusions may differ from the height of the other protrusions, and the heights of the adjacent protrusions may differ. The plurality of protrusions may include protrusions having a height h1 and protrusions having a height h2 smaller than the height h1. In this case, the ratio: h2/h1 of the height h2 to the height h1 may be, for example, 0.8 or more and less than 1.0, or may be 0.8 or more and 0.95 or less. The width of the protrusions (width W of line-shaped protrusions 401 in FIG. 1) is, for example, 1 mm or less, or may be 0.1 mm or more and 1 mm or less.

From the viewpoint of suppressing the deposition of lithium metal on the surfaces of the plurality of protrusions, the protrusions may be made of a material having a conductivity lower than those of the positive electrode and the negative electrode, or may be made of a resinous material.

The material constituting the spacer layer is not particularly limited. The spacer layer is preferably formed of materials containing an insulative material. Lithium metal is hard to deposit on the surface of insulative materials. Therefore, the effectiveness of suppressing the expansion of the negative electrode can be enhanced.

The spacer layer contains a resin as an insulative material, and further contains a filler. Examples of the material of the resin include polyolefin resins, acrylic resins, polyamide resins, polyimide resins, silicone resins, fluorinated resins, urethane resins, melamine resins, and urea resins. As the material of the resin, a cured product of a curable resin, such as an epoxy resin may be used. Alternatively, an inorganic filler or the like may be mixed with any of these materials of the resin.

The filler contained in the spacer layer may be made of an insulative material, and may be conductive.

Examples of the filler include inorganic particles such as metal oxide particles, metal nitride particles, metal fluoride particles, and metal carbide particles. The inorganic particles can impart heat resistance to the separator. Resin particles may be used as the filler.

Examples of the metal oxide particles include particles of aluminum oxide, titanium oxide, magnesium oxide, zirconium oxide, nickel oxide, silicon oxide, and manganese oxide. Examples of the metal nitride particles include particles of titanium nitride, boron nitride, aluminum nitride, magnesium nitride, and silicon nitride. Examples of the metal fluoride particles include particles of aluminum fluoride, lithium fluoride, sodium fluoride, magnesium fluoride, calcium fluoride, and barium fluoride. Examples of the metal carbide particles include particles of silicon carbide, boron carbide, titanium carbide, and tungsten carbide.

The inorganic particles may be made of a porous aluminosilicate such as zeolite (M_{2/n}O·Al₂O₃·xSiO₂·yH₂O, where M is a metal element, n is a valence of M, x ≥ 2, and y ≥ 0), a layered silicate such as talc (Mg₃Si₄O₁₀(OH)₂), or a mineral such as barium titanate (BaTiO₃) or strontium titanate (SrTiO₃). Note that these may be used alone or in combination of two or more thereof.

The spacer layer desirably has a Young's modulus of 0.01 GPa or more and 10 GPa or less. This allows stresses caused by expansion and contraction of the negative electrode to be easily released, and the space in which lithium metal is accommodated is also easily maintained. In addition, damage to the electrode due to the presence of the spacer layer is likely to be suppressed. Examples of the material that is insulative and has a Young's modulus in the above range include the above-described cured product of the curable resin.

When the spacer layer is provided on each of the first main surface and the second main surface, it is possible that the spacer layer provided on the second main surface includes a first layer provided on the second main surface of the separator, and a second layer in contact with the first layer in the height direction, and the ratio R₁/R₂ is greater than 1, where R₁ represents the area ratio of the filler contained in the first layer, and R₂ represents the area ratio of the filler contained in the second layer, similarly to the spacer layer provided on the first main surface.

The lithium secondary battery may include a stacked electrode configured by stacking the positive electrode and the negative with the separator therebetween, or may include a wound electrode group configured by spirally winding the positive electrode and the negative electrode with the separator therebetween.

A composite member according to an embodiment of the present disclosure relates to a separator provided with the above-described spacer layer. The composite member includes a separator having a first main surface, and a spacer layer provided on the first main surface of the separator. The spacer layer contains a resin and a filler. The spacer layer includes a first layer provided closest to the first main surface in the height direction intersecting the first main surface, and a second layer in contact with the first layer in the height direction. The ratio R₁/R₂ is greater than 1, where R₁ represents the area ratio of the filler contained in the first layer and R₂ represents the area ratio of filler contained in second spacer layer. Here, both R₁ and R₂ are calculated based on a cross-section taken along the height direction of the separator layer.

Hereinafter, the respective components of the lithium secondary battery are described in more detail.

### [Negative Electrode]

The negative electrode includes a negative electrode current collector. In the lithium secondary battery, lithium metal is deposited on the surface of the negative electrode current collector by charging. More specifically, lithium ions contained in the nonaqueous electrolyte receives electrons on the negative electrode current collector by charging to change into lithium metal, thereby depositing on the surface of the negative electrode current collector. The lithium ions deposited on the surface of the negative electrode current collector changes into lithium ions by discharging to be dissolved into the nonaqueous electrolyte. The lithium ions contained in the nonaqueous electrolyte may be derived from a lithium salt added to the nonaqueous electrolyte, may be supplied from the positive electrode active material by charging, or may be both of these.

The negative electrode current collector may be a conductive film. As the conductive sheet, a foil, a film, or the like is used.

The surface of the conductive sheet may be smooth. This makes it easy for the lithium metal derived from the positive electrode to be uniformly deposited on the conductive film during charging. The term smooth means that the maximum height roughness Rz of the conductive sheet is 20 µm or less. The maximum height roughness Rz of the conductive sheet may be 10 µm or less. The maximum height roughness Rz is measured in accordance with JIS B 0601:2013.

The material of the negative electrode current collector (conductive sheet) should be any conductive material other than lithium metal and lithium alloys. The conductive material may be a metal material such as a metal or an alloy. The conductive material is preferably a material that does not react with lithium. More specifically, a material that does not form an alloy or an intermetallic compound with lithium is preferable. Examples of such a conductive material include copper (Cu), nickel (Ni), iron (Fe), alloys containing any of these metallic elements, and graphite having a preferentially exposed basal plane. Examples of the alloys include copper alloys and stainless steel (SUS). Among these, either or both copper and a copper alloy having high conductivity are preferable.

The thickness of the negative electrode current collector is not particularly limited, and is 5 µm or more and 300 µm or less, for example.

On the surface of the negative electrode current collector, a negative electrode mixture layer (not illustrate) may be formed. The negative electrode mixture layer is formed, for example, by applying a paste containing a negative electrode active material such as graphite to at least a part of the surface of the negative electrode current collector. However, the thickness of the negative electrode mixture layer is set to be sufficiently thin so as to allow lithium metal to be deposited in the negative electrode from the viewpoint of achieving a high-capacity lithium secondary battery surpassing the lithium-ion batteries. In this case, the open-circuit potential of the negative electrode at full charge may be 70 mV or less relative to the lithium metal (the lithium dissolution-deposition potential). When the open-circuit potential of the negative electrode at full charge is 70 mV or less at full charge relative to the lithium metal, the lithium metal is present on the surface of a lithium ion absorption layer at full charge. That is, the negative electrode exhibits the capacity by deposition and dissolution of lithium metal.

### [Positive Electrode]

The positive electrode includes a positive electrode current collector and a positive electrode mixture layer supported on the positive electrode current collector, for example. The positive electrode mixture layer contains a positive electrode active material, a conductive material, and a binder, for example. The positive electrode mixture layer may be formed on only one side of the positive electrode current collector or on both sides. The positive electrode is obtained, for example, by applying a positive electrode mixture slurry containing a positive electrode active material, a conductive material, and a binder to the respective surfaces of the positive electrode current collector, drying the coated films, and then rolling.

The positive electrode active material is a material that absorbs and releases lithium ions. Examples of the positive electrode active material include lithium-containing transition metal oxides, transition metal fluorides, polyanions, fluorinated polyanions, and transition metal sulfides. Among these, a lithium-containing transition metal oxide is preferable because of low manufacturing cost and a high average discharge voltage of it.

Examples of the transition metal element contained in the lithium-containing transition metal oxide include Sc, Ti, V, Cr, Mn, Fe, Co, Ni, Cu, Y, Zr, and W. The lithium-containing transition metal oxide may contain one transition metal element or two or more transition metal elements. The transition metal element may be Co, Ni or Mn or a combination thereof. The lithium-containing transition metal oxide can contain one or more typical elements. Examples of the typical elements include Mg, Al, Ca, Zn, Ga, Ge, Sn, Sb, Pb, and Bi. One typical element may be Al or the like.

Among the lithium-containing transition metal oxides, a composite oxide that contains Co, Ni or Mn or a combination thereof each as the transition metal element, which may contain Al as an optional component, and which has a rock salt-type crystalline structure having a layered structure is preferable from the viewpoint of achieving a high capacity. In this case, a molar ratio mLi/mM of a total amount mLi of lithium contained in the positive electrode and the negative electrode to an amount mM of the metal M other than lithium contained in the positive electrode is set to 1.1 or less, for example, in the lithium secondary battery.

The conductive material is a carbonous material, for example. Examples of the carbonous material include carbon black, acetylene black, Ketjen black, carbon nanotube, and graphite.

Examples of the binder include fluorocarbon resins, polyacrylonitrile, polyimide resins, acrylic resins, polyolefin resins, and rubbery polymers. Examples of the fluorocarbon resins include polytetrafluoroethylene and polyvinylidene fluoride.

The positive electrode current collector may be a conductive film. As the conductive sheet, a foil, a film, or the like is used. The surface of the positive electrode current collector may be coated with a carbonous material.

Examples of the material of the positive electrode current collector (conductive sheet) include metallic materials including Al, Ti, Fe, and the like. The metallic material may be Al, an Al alloy, Ti, a Ti alloy, or an Fe alloy, for example. The Fe alloy may be stainless steel (SUS).

The thickness of the positive electrode current collector is not particularly limited, and is 5 µm or more and 300 µm or less, for example.

### [Separator]

The separator may be composed of only the base layer, or may include the base layer and the later-described composite material layer. When the separator is composed of only the base layer, the spacer layer is provided on the surface of the base layer. When the separator includes the base layer and the composite material layer, the spacer layer may be provided on the surface of the base layer, provided on the surface of the composite material layer, or provided on both surfaces of the base layer and the composite material layer. The above-described configuration is employed for the spacer layer.

### (Base Layer)

As the base layer of the separator, a porous sheet having ion permeability and insulating properties is used. Examples of the porous sheet include thin films having micropores, woven fabrics, and nonwoven fabrics. The material of the separator is not particularly limited, and may be a polymer material. Examples of the polymer material include olefin resins, polyamide resins, and cellulose. Examples of the olefin resins include polyethylene, polypropylene, and copolymers of ethylene and propylene. The separator may contain an additive, as necessary. Examples of the additive include inorganic fillers.

### (Composite Material Layer)

The composite material layer of the separator can be formed on the base layer of the separator, for example. The composite material layer is preferably a porous layer. A method for forming a porous composite material layer is not particularly limited, and any known method may be used. For example, a porous composite material layer may be formed by printing the base layer with a raw material of the composite material layer as an ink.

The composite material layer may be formed on the positive electrode-side main surface of the two main surfaces of the base layer, may be formed on the negative electrode-side main surface, or may be formed on each of the two main surfaces. The spacer layer may be formed on the composite material layer or may be formed on the base layer without the composite material layer interposed therebetween. For example, the separator may have any of the following configurations: base layer/composite material layer/spacer layer, composite material layer/base layer/spacer layer, and composite material layer/base layer/composite material layer/spacer layer. In these configurations, formation of the spacer on the composite material layer can significantly suppress thermal shrinkage of the base layer.

The composite material layer contains a polymer (hereinafter referred to also as "polymer PL") and inorganic particles. The inorganic particles may include either or both first particles and second particles. The first particles are particles of the lithium-containing phosphate. The second particles are particles other than the first particles. The composite material layer is a layer that transmits lithium ions.

The separator may be provided such that the composite material layer faces the positive electrode or faces the negative electrode layer. By providing the composite material layer on the positive electrode-side, degradation of the base layer due to an oxidative reaction can be suppressed. By providing the composite material layer on negative electrode-side by contrast, degradation of the base layer due to the reduction reaction can be suppressed.

The phosphate constituting the first particles may be at least one selected from the group consisting of lithium phosphate (Li₃PO₄), dilithium hydrogen phosphate (Li₂HPO₄), and lithium dihydrogen phosphate (LiH₂PO₄). Among these, lithium phosphate is preferable from the viewpoint of exhibiting an effect of significantly suppressing heat generation in the battery under an abnormal condition.

The average particle diameter of the first particles may be in the range of 0.1 µm to 1.0 µm (e.g., in the range of 0.1 µm to 0.5 µm, in the range of 0.1 µm to 0.2 µm, or in the range of 0.1 µm to 0.19 µm). The average particle diameter of the first particles may be 0.1 µm or more, or 0.15 µm or more. The average particle diameter of the first particles may be 1.0 µm or less, 0.5 µm or less, 0.3 µm or less, or 0.2 µm or less. As a result of the average particle diameter being set to 0.1 µm or more, sufficient pores necessary for the liquid electrolyte to permeate can be ensured. Setting the average particle diameter to 1.0 µm or less is preferable because high-density layers of the first particles can be formed.

As the polymer (PL), a polymer having a heat resistance higher than that of the main component of the base layer of the separator can be used. The polymer (PL) preferably contains at least one selected from the group consisting of aromatic polyamide, aromatic polyimide, and aromatic polyamideimide. These are known as polymers (macromolecules or resins in other respects) that have high heat resistance. In terms of heat resistance, aramids, that is, meta-aramids (wholly aromatic meta-polyamides) and para- aramids (wholly aromatic para-polyamides) are preferable. One preferred polymer (PL) is a meta-aramid. As the polymer (PL), any known one of aromatic polyamides, aromatic polyimides, or aromatic polyamideimides may be used.

Example of the aromatic polyamides (polymer (PL)) include polymers that are formed by condensation polymerization of a monomer having an aromatic framework and that have an amide bond in its repeating unit. Examples of the aromatic polyamides (e.g., wholly aromatic polyamides) include aromatic meta-polyamides (e.g., wholly aromatic meta-polyamides) and aromatic para-polyamides (e.g., wholly aromatic para-polyamides). The wholly aromatic polyamides are also referred to as aramids.

Preferable examples of the second particles (inorganic particles) are particles that neither melt nor decompose upon abnormal heat generation in a battery and that are formed of an insulative inorganic compound. The second particles may be inorganic particles typically used in the form of an inorganic filler. Example of the material of the second particles include oxides, oxide hydrates, hydroxides, nitrides, carbides, and sulfides, which may contain a metallic element. The average particle diameter of the second particles may be 0.2 µm or more and 2 µm or less.

Examples of the oxides and the oxide hydrates include aluminum oxide, boehmite, magnesium oxide, titanium oxide, zirconium oxide, silicon oxide, yttrium oxide, and zinc oxide. Examples of the nitrides include silicon nitride, aluminum nitride, boron nitride, and titanium nitride. Examples of the carbides include silicon carbide and boron carbide. Example of the sulfides include barium sulfate. Examples of the hydroxides include aluminum hydroxide.

Alternatively, the material of the second particles may be a porous aluminosilicate such as zeolite, a layered silicate such as talc, barium titanate (BaTiO₃), or strontium titanate (SrTiO₃), for example. In terms of insulating properties, heat resistance, and the like, at least one selected from the group consisting of aluminum oxide, boehmite, talc, titanium oxide, and magnesium oxide may be used as the material of the second particles.

The average particle diameter of the second particles may be in the range exemplified for the first particles.

The inorganic particles may include the aforementioned first particles and second particles containing a material other than phosphate. In this case, the composite material layer may include a first layer containing the first particles and a second layer containing the second particles. According to this configuration, excessive temperature rise of the electrode group can be significantly suppressed. The composite material layer may be composed of a single layer or a plurality of layers.

### [Nonaqueous Electrolyte]

The nonaqueous electrolyte having lithium ion conductivity contains a nonaqueous solvent and lithium ions and anions dissolved in the nonaqueous solvent, for example. The nonaqueous electrolyte may be in the liquid state or the gel state.

A nonaqueous electrolyte in the liquid state is prepared by dissolving a lithium salt in a nonaqueous solvent. The lithium salt dissolves in the nonaqueous solvent to form lithium ions and anions.

A nonaqueous electrolyte in the gel state contains a lithium salt and a matrix polymer, or contains a lithium salt, a nonaqueous solvent, and a matrix polymer. As the matrix polymer, a polymer material that absorbs the nonaqueous solvent to gel is used, for example. Examples of the polymer material include fluorocarbon resins, acrylic resins, and polyether resins.

As the lithium salt or the anions, a known one used for nonaqueous electrolytes of lithium secondary batteries can be used. Specific examples thereof include BF₄⁻, ClO₄⁻, PF₆⁻, CF₃SO₃⁻, CF₃CO₂⁻, anions of imides, and anions of oxalate complexes. Examples of the anions of imides include N(SO₂CF₃)₂⁻ and N(CₘF₂ₘ₊₁SO₂)ₓ(CₙF₂ₙ₊₁SO₂)_{y}⁻ (m and n are each independently 0 or an integer of 1 or more, x and y are each independently 0, 1 or 2, and x + y = 2). The anions of oxalate complexes may contain either or both boron and phosphorus. Examples of the anions of oxalate complexes include bis(oxalate)borate anions, BF₂(C₂O₄)⁻, PF₄(C₂O₄)⁻, and PF₂(C₂O₄)₂⁻. The nonaqueous electrolyte may contain one type of these anions alone or two or more types.

From the viewpoint of suppressing the lithium metal from being deposited in a dendritic form, the nonaqueous electrolyte preferably contains at least anions of an oxalate complex. The interaction between the anions of the oxalate complex and the lithium tends to allow the lithium metal to be deposited uniformly in a fine particle form. Therefore, local deposition of the lithium metal can be easily suppressed. The anions of the oxalate complex and other anions may be used in combination. The other anions may be either or both PF₆⁻ and anions of an imide.

Examples of the nonaqueous solvent include esters, ethers, nitrites, amides, and halogen-substituted compounds of these. The nonaqueous electrolyte may contain one of these nonaqueous solvents alone, or may contain two or more of these. Examples of the halogen-substituted compound include fluorides.

Examples of the esters include carbonic acid esters and carboxylic acid esters. Examples of cyclic carbonic acid esters include ethylene carbonate, propylene carbonate, and fluoroethylene carbonate (FEC). Examples of chain carbonic acid esters include dimethyl carbonate (DMC), ethyl methyl carbonate (EMC), and diethyl carbonate. Examples of cyclic carboxylic acid esters include γ-butyrolactone and γ-valerolactone. Examples of chain carboxylic acid esters include ethyl acetate, methyl propionate, and methyl fluoropropionate.

Examples of the ethers include cyclic ethers and chain ethers. Examples of the cyclic ethers include 1,3-dioxolane, 4-methyl-1,3-dioxolane, tetrahydrofuran, and 2-methyltetrahydrofuran. Examples of the chain ethers include 1,2-dimethoxyethane, diethyl ether, ethyl vinyl ether, methyl phenyl ether, benzyl ethyl ether, diphenyl ether, dibenzyl ether, 1,2-diethoxyethane, and diethylene glycol dimethyl ether.

The concentration of the lithium salt in the nonaqueous electrolyte is 0.5 mol/L or higher and 3.5 mol/L or lower, for example. The concentration of the anions in the nonaqueous electrolyte may be 0.5 mol/L or higher and 3.5 mol/L or lower. Alternatively, the concentration of the anions of an oxalate complex in the nonaqueous electrolyte may be 0.05 mol/L or higher and 1 mol/L or lower.

The nonaqueous electrolyte may contain an additive. The additive may be an additive that forms a film on the negative electrode. When a film derived from the additive is formed on the negative electrode, generation of dendrites tends to be suppressed. Examples of the additive such as above include vinylene carbonate, FEC, and vinyl ethyl carbonate (VEC).

Hereinafter, the configuration of the lithium secondary battery according to the present disclosure is described with reference to the drawings by referring to a cylindrical battery including a wound electrode group as an example. However, the present disclosure is not limited to the following configuration.

FIG. 1 is a longitudinal cross-sectional view of a lithium secondary battery 10. The lithium secondary battery 10 is a cylindrical battery including a cylindrical battery case, an electrode group 14 of a wound type housed in the battery case, and a non- illustrated nonaqueous electrolyte. The battery case is composed of a case main body 15 that is a bottomed cylindrical metal-made container, and a sealing body 16 that seals the opening of the case main body 15. The case main body 15 has an annular stepped portion 21 formed by partially pressing a part of the side wall near the opening from the outside. The sealing body 16 is supported on the surface of the stepped portion 21 on the opening side. A gasket 27 is provided between the case main body 15 and the sealing body 16 to ensure the sealing properties of the battery case. Insulation plates 17 and 18 are provided at the respective ends of the electrode group 14 in the winding axial direction in the case main body 15.

The sealing body 16 includes a filter 22, a lower valve body 23, an insulating member 24, an upper valve body 25, and a cap 26. The cap 26 is located outside the case main body 15, while the filter 22 is located inside the case main body 15. The lower valve body 23 and the upper valve body 25 are connected to each other at the central parts thereof, and the insulating member 24 is located between the peripheral parts thereof. The filter 22 and the lower valve body 23 are connected to each other at the peripheral parts thereof. The upper valve body 25 and the cap 26 are connected to each other at the peripheral parts thereof. A vent hole is formed in the lower valve body 23. When the internal pressure of the battery case increases due to abnormal heat generation or the like, the upper valve body 25 bulges toward the cap 26 and separates from the lower valve body 23. As a result, the electrical connection between the lower valve body 23 and the upper valve body 25 is cut off. When the internal pressure further increases, the upper valve body 25 is broken, and the gas is discharged from the opening formed in the cap 26.

The electrode group 14 is composed of a positive electrode 110, a negative electrode (negative electrode current collector) 120, and a separator 300. The positive electrode 110, the negative electrode 120, and the separator 300 located therebetween are all band-shaped and spirally wound such that their width directions are parallel to the winding axis.

The positive electrode 110 is electrically connected to the cap 26, which also serves as a positive electrode terminal, via a positive electrode lead 19. One end of the positive electrode lead 19 is connected, for example, to the vicinity of the center of the positive electrode 110 in the longitudinal direction. The other end of the positive electrode lead 19, which extends out from the positive electrode 110, passes through a through-hole formed in the insulation plate 17 and is welded to the inner side surface of the filter 22.

The negative electrode 120 is electrically connected to the case main body 15, which also serves as a negative electrode terminal, via a negative electrode lead 20. One end of the negative electrode lead 20 is connected to, for example, an end of the negative electrode 120 in the longitudinal direction, while the other end thereof is welded to the inner bottom surface of the case main body 15.

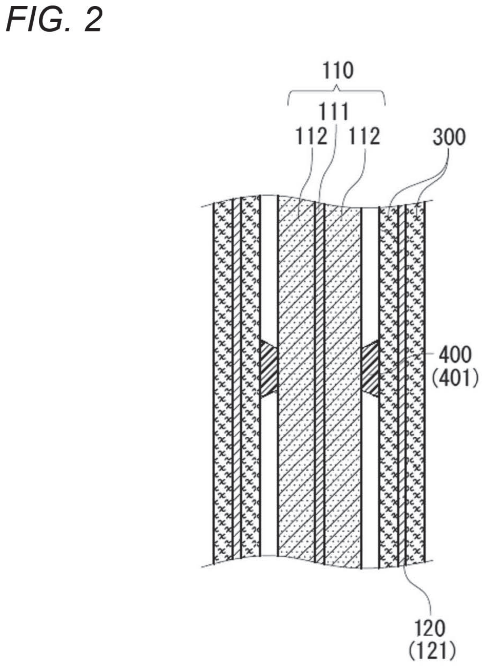

FIG. 2 is a schematic enlarged view of a region X in a discharge state surrounded by the broken line in FIG. 1. The spacer layer has a trapezoidal cross-section in the illustrated example, but embodiments of the present disclosure are not limited thereto. In the illustrated example, the spacer layer is provided between the positive electrode and the separator. However, embodiments of the present disclosure are not limited thereto, and the spacer layer may be provided between the negative electrode and the separator or between the separator and each of the positive electrode and the negative electrode.

The positive electrode 110 includes a positive electrode current collector 111 and a positive electrode mixture layer 112. A spacer layer 400 is provided between the positive electrode mixture layer 112 and the separator 300. The spacer layer 400 is composed of line-shaped protrusions 401 arranged in the longitudinal direction (circumferential direction of winding) of the separator 300. In a discharged state, no lithium metal is deposited on the surface of the negative electrode current collector 121, and a space is maintained between the positive electrode 110 and the separator 300. In a charged state by contrast, lithium metal is deposited on the surface of the negative electrode current collector 121 and is accommodated in the space between the positive electrode 110 and the separator 300 under the pressing force of the separator 300. That is, the negative electrode 120 includes the negative electrode current collector 121 in a discharge state and includes the negative electrode current collector 121 and lithium metal deposited thereon in a charged state.

Since lithium metal is accommodated in the space between the positive electrode 110 and the separator 300, the apparent volume change of the electrode group due to the deposition of lithium metal in charge-discharge cycles is reduced. Thus, stress applied to the negative electrode current collector 121 is also reduced. In addition, since the lithium metal accommodated between the positive electrode 110 and the separator 300 receives pressure from the separator 300, the state of lithium metal deposition is controlled, so that the lithium metal is less likely to be isolated to suppress a decrease in charge-discharge efficiency.

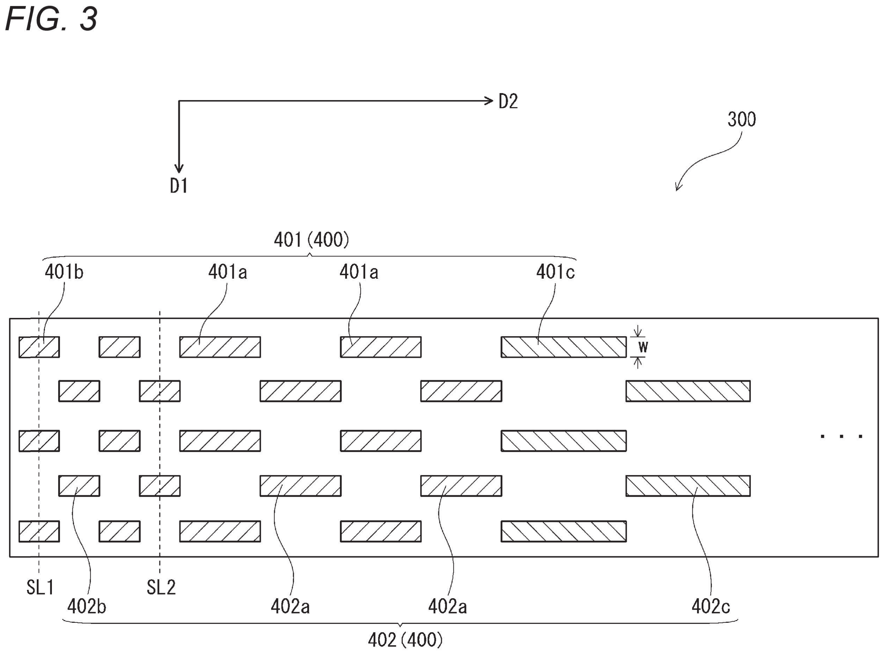

FIG. 3 is a schematic plan view of the placement of the spacer layer on the surface of the separator 300. In the example of FIG. 3, the spacer layer 400 is composed of a plurality of line-shaped protrusions extending substantially in parallel in a circumferential direction D2 of the winding. Note that "substantially in parallel" means generally in parallel, and line-shaped protrusions may intersect at an angle of, for example, 0° to 20° or 0° to 10°.

More specifically, the spacer layer 400 includes a plurality of line-shaped protrusions 401 and 402 extending in the circumferential direction D2. The line-shaped protrusions 402 differ from the line-shaped protrusions 401 in position in an axial direction D1 and the circumferential direction D2. The plurality of line-shaped protrusions 401 or 402 are arranged in a staggered manner as a whole on the surface of the separator 300. When a straight line parallel to the winding axis direction D1 is drawn at any point of the separator 300, the straight line passes through three line-shaped protrusions 401 (dashed line SL1 in FIG. 1) or passes through two line-shaped protrusions 402 (dashed line SL2 in FIG. 1). There are two or more types of straight lines passing therethrough, which make it easy to ensure a space for lithium metal deposition.

The plurality of line-shaped protrusions 401 are arranged such that their length (width in the second direction) increases in the second direction D2 toward the outer peripheral side of the winding, while the distance (center-to-center distance) between adjacent protrusions in the second direction also increases. In the example of FIG. 3, the plurality of line-shaped protrusions 401 include a plurality of line-shaped protrusions 401a, 401b, 401c. The line-shaped protrusions 401b are located on the inner peripheral side of the winding relative to the line-shaped protrusions 401a. The line-shaped protrusions 401c are located on the outer peripheral side of the winding relative to the line-shaped protrusions 401a. The plurality of line-shaped protrusions 402 include a plurality of line-shaped protrusions 402a, 402b, 402c. The line-shaped protrusions 402b are located on the inner peripheral side of the winding relative to the line-shaped protrusions 402a. The line-shaped protrusions 402c are located on the outer peripheral side of the winding relative to the line-shaped protrusions 402a.

As described above, the widths and the arrangement intervals in the circumferential direction D2 of the line-shaped protrusions 401 and 402 are set to gradually increase toward the outer peripheral side of the winding. As a result, when the electrode group is formed, the line-shaped protrusions 401 (401a, 401b, and 401c) are aligned in the radial direction to form radial rows, and the line-shaped protrusions 402 (402a, 402b, and 402c) are aligned in the radial direction to form radial rows.

However, when the spacer layer 400 is formed by application or printing of a solution or dispersion liquid containing a resin and a filler, the separator may shrink when the solvent is removed by drying, to form wrinkles. The wrinkles cause misalignment of the line-shaped protrusions 401 and 402. For example, when the position of the line-shaped protrusions 401a, 401b, 401c (402a, 402b, and 402c) is displaced in the winding axial direction D1, the line-shaped protrusions 401a, 401b, and 401c are not aligned in the radial direction and no radial rows are formed when the electrode group is formed. In addition, when the position of the line-shaped protrusions 401a, 401b, and 401c (402a, 402b, and 402c) is displaced in the circumferential direction D2, a region where no radial rows are formed occurs in a part of the circumference.

According to the lithium secondary battery of an embodiment of the present disclosure, the contraction and the wrinkle formation can be suppressed by increasing the content percentage of the filler in the first layer of the spacer layer located on the first main surface of the separator. As a result, displacement of the protrusions of the spacer layer is suppressed. Thus, the space forming effect by the protrusions of the spacer layer can be maintained high, and a decrease in cycle characteristics can be effectively suppressed.

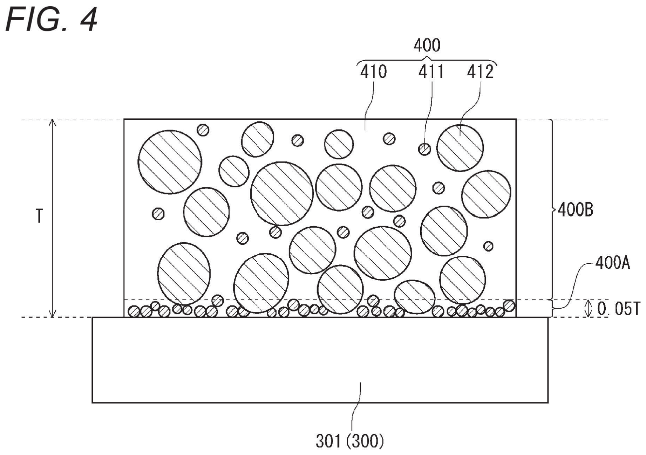

FIG. 4 is a schematic cross-sectional view of an example of the internal structure of the spacer layer 400. The spacer layer 400 contains a resin 410, a first filler 411, and a second filler 412 having an average particle diameter larger than that of the first filler. The first filler 411 and the second filler 412 are dispersed in the resin 410. However, the first filler 411 and the second filler 412 (particularly, the first filler 411) are distributed locally toward a base layer 301 of the separator 300, and the area ratio R₁ of the filler in the first layer 400A near the base layer is larger than the area ratio R₂ of the filler in the second layer 400B in contact with the first layer on the side opposite the base layer.

Although a cylindrical lithium secondary battery including an electrode group of a wound type has been described in the illustrated example, the shape and the like of the lithium secondary battery is not limited thereto. The shape thereof can be appropriately selected from various shapes such as a coin shape, a prismatic shape, a sheet shaped, and a flat shape, other than the cylindrical shape, according to the application and the like. The configuration of the electrode group is also not particularly limited, and may be of a stacked type. In addition, the electrode group and the nonaqueous electrolyte of the lithium secondary battery may have any known configurations without particular limitation.

### <<Supplemental Note>>

According to the above description of the embodiments, the following techniques are disclosed.

### (Technique 1)

A lithium secondary battery including:
a positive electrode; a negative electrode facing the positive electrode; a separator provided between the positive electrode and the negative electrode, and a nonaqueous electrolyte,
wherein in the negative electrode, lithium metal is deposited during charging, and the lithium metal is dissolved during discharging,
the separator has a first main surface,
the secondary battery further comprises a spacer layer provided on the first main surface of the separator,
the spacer layer contains a resin and a filler,
the spacer layer includes a first layer provided closest to the first main surface in a height direction intersecting the first main surface, and a second layer in contact with the first layer in the height direction, and
a ratio R₁/R₂ is greater than 1, where R₁ represents an area ratio of the filler contained in the first layer, and R₂ represents an area ratio of the filler contained in the second layer, both calculated based on a cross-section of the spacer layer taken along the height direction.

### (Technique 2)

The Secondary battery according to Technique 1, wherein the ratio R₁/R₂ is greater than 1 and 10 or less.

### (Technique 3)

The lithium secondary battery according to Technique 2, wherein the ratio R₁/R₂ is 1.03 or more and 4.25 or less.

### (Technique 4)

The lithium secondary battery according to Technique 3, wherein the ratio R₁/R₂ is 1.07 or more and 2.8 or less.

### (Technique 5)

The lithium secondary battery according to any one of Techniques 1 to 4, wherein R₁ is 0.7 or more and 0.85 or less.

### (Technique 6)

The lithium secondary battery according to any one of Techniques 1 to 5, wherein R₂ is 0.3 or more and 0.8 or less.

### (Technique 7)

The lithium secondary battery of any one of Techniques 1 to 6, wherein the filler includes a first filler having an average particle diameter of less than 1 µm and a second filler having an average particle diameter of 1 to 10 µm.

### (Technique 8)

The lithium secondary battery according to Technique 7, wherein in the cross-section, an area ratio of the first filler to a sum of the first filler and the second filler contained in the first layer is larger than an area ratio of the first filler to a sum of the first filler and the second filler contained in the second layer.

### (Technique 9)

The lithium secondary battery according to any one of Techniques 1 to 8, wherein where T represents a thickness of the spacer layer in the height direction, a thickness of the first layer is not less than a smaller one of 2 µm and 0.05T.

### (Technique 10)

A composite member including:
a separator having a first main surface; and a spacer layer provided on the first main surface of the separator,
wherein the spacer layer contains a resin and a filler,
the spacer layer includes a first layer provided closest to the first main surface in a height direction intersecting the first main surface, and a second layer in contact with the first layer in the height direction, and
a ratio R₁/R₂ is greater than 1, where R₁ represents an area ratio of the filler contained in the first layer, and R₂ represents an area ratio of the filler contained in the second layer, both calculated based on a cross-section of the spacer layer taken along the height direction.

### (Technique 11)

The composite member according to Technique 10, wherein the ratio R₁/R₂ is greater than 1 and 10 or less.

### (Technique 12)

The composite member according to Technique 11, wherein the ratio R₁/R₂ is 1.03 or more and 4.25 or less.

### (Technique 13)

The composite member according to Technique 12, wherein the ratio R₁/R₂ is 1.07 or more and 2.8 or less.

### (Technique 14)

The composite member according to any one of Techniques 10 to 13, wherein the filler includes a first filler having an average particle diameter of less than 1 µm and a second filler having an average particle diameter of 1 to 10 µm.

### (Technique 15)

The composite member according to Technique 14, wherein in the cross-section, an area ratio of the first filler to a sum of the first filler and the second filler contained in the first layer is larger than an area ratio of the first filler to a sum of the first filler and the second filler contained in the second layer.

### [Examples]

Hereinafter, the lithium secondary battery according to the present disclosure are described specifically based on examples and comparative examples. However, the present disclosure is not limited to the following examples.

### <<Example 1>>

### (1) Positive Electrode Production

A positive electrode mixture slurry was prepared by mixing a rock salt-type lithium-containing transition metal oxide (NCA; positive electrode active material) with a layered structure containing Li, Ni, Co and Al (molar ratio of Li to sum of Ni, Co, and Al is 1.0), acetylene black (AB; conductive material), and polyvinylidene fluoride (PVdF; binder) in a mass ratio NCA:AB:PVdF of 95:2.5:2.5, and further adding an appropriate amount of N-methyl-2-pyrrolidone (NMP) under stirring. Next, the obtained positive electrode mixture slurry was applied to both sides of an Al foil (positive electrode current collector) and dried. The resulting coated film of the positive electrode mixture was then rolled using a roller. Finally, the resulting stack of the positive electrode current collector and the positive electrode mixture was cut to a predetermined electrode size to produce a positive electrode including a positive electrode mixture layer on each side of the positive electrode current collector.

### (2) Separator (Composite Member) Production

A separator substrate (microporous film) made of polyethylene was prepared. Inks were applied to predetermined regions of the surface of the separator substrate using a dispenser, and then dried by hot air to provide a spacer layer.

As the inks applied to the surface of the separator substrate, two resin compositions were prepared by dissolving or dispersing polyvinylidene fluoride (PVdF), alumina particles (first filler), and polyethylene (PE) resin particles (second filler) in a dispersing medium. The two resin compositions differ in the blending ratios of the alumina particles and the polyethylene resin particles. Particles having an average particle diameter of 0.4 µm were used as the alumina particles. Particle having an average particle diameter of 5 µm were used as the polyethylene resin particles.

A first ink for first layer formation was obtained by mixing 40 parts by volume of polyvinylidene fluoride, 20 parts by volume of the alumina particles, and 40 parts by volume of the polyethylene resin particles. A second ink for second layer formation was obtained by mixing 40 parts by volume of polyvinylidene fluoride and 60 parts by volume of the polyethylene resin particles. After the first ink was applied to a predetermined region of the surface of the separator substrate to form the first layer, the second ink was applied to the surface of the first layer and dried to remove the dispersion medium, thereby forming the second layer.

In the manner described above, a composite member was obtained in which a spacer layer including the first layer and the second layer was located on the surface of the separator substrate. The thicknesses of the first layer and the second layer were set to be the same. The total thickness of the spacer layer (height of the protrusions) was 40 µm.

A cross-section of the separator along the spacer layer was formed, and the area ratios of the fillers were evaluated by analyzing its SEM cross-sectional image. The area ratio R₁ of the filler in the first layer was 0.7, and the area ratio R₂ of the filler in the second layer was 0.55. Accordingly, the ratio R₁/R₂ was 1.27.

### (3) Negative Electrode Production

A rectangular electrolytic copper foil (12 µm thick) was prepared as a negative electrode current collector.

### (4) Nonaqueous Electrolyte Preparation

Ethylene carbonate (EC) and dimethyl carbonate (DMC) were mixed in a volume ratio EC:DMC of 30:70, and LiPF₆ and LiBF₂(C₂O₄) were dissolved in the resulting mixed solvent at a concentration of 1 mol/L and 0.1 mol/L, respectively, to prepare a nonaqueous liquid electrolyte.

### (5) Battery Assembly

In an inert gas atmosphere, the positive electrode and the negative electrode current collector were spirally wound with the composite member therebetween to produce an electrode group. In the electrode group, the composite member was positioned such that the spacer layer faced the positive electrode. Since lithium contained in the electrode group is entirely derived from the positive electrode, the molar ratio: mLi/mM of the total amount mLi of lithium of the positive electrode and the negative electrode to the amount mM of the metal M (here, Ni, Co and Al) of the positive electrode is 1.0.

The electrode group was housed in a bag-shaped outer housing formed of a laminated sheet including an Al layer. After the nonaqueous electrolyte was injected thereinto, the outer housing was sealed to complete a lithium secondary battery A1.

### <<Example 2>>

In the separator production, a spacer layer was formed using inks in which ethyl cellulose resin (EC), the alumina particles (first filler), and the polyethylene (PE) resin particles (second filler) were dissolved or dispersed in a dispersing medium.

A first ink for first layer formation was obtained by mixing 30 parts by volume of the ethyl cellulose resin, 20 parts by volume of the alumina particles, and 50 parts by volume of the polyethylene resin particles. A second ink for second layer formation was obtained by mixing 40 parts by volume of the ethyl cellulose resin and 60 parts by volume of the polyethylene resin particles. After the first ink was applied to a predetermined region of the surface of the separator substrate to form a first layer, the second ink was applied to the surface of the first layer and dried to remove the dispersion medium, thereby forming a second layer.

In the manner described above, a composite member was obtained in which a spacer layer including the first layer and the second layer was located on the surface of the separator substrate. The thicknesses of the first layer and the second layer were set to be the same. The total thickness of the spacer layer (height of the protrusions) was 40 µm.

A cross-section of the separator along the spacer layer was formed, and the area ratios of the fillers were evaluated by analyzing its SEM cross-sectional image. The area ratio R₁ of the filler in the first layer was 0.75, and the area ratio R₂ of the filler in the second layer was 0.7. The ratio R₁/R₂ was accordingly 1.07.

A lithium secondary battery A2 of Example 2 was completed in the same manner as in Example 1 except that the separator thus obtained was used.

### <<Examples 3 to 5 and Comparative Examples 1 to 3>>

In the separator production, the content percentages of the ethyl cellulose resin, the alumina particles, and the polyethylene resin particles contained in the first and second inks were changed from those in Example 2. Except for the above, lithium secondary batteries A3 to A5 of Example 3 to 5 and B1 to B3 of Comparative Examples 1 to 3 were completed in the same manner as in Example 2.

In Example 3, a first ink for first layer formation was obtained by mixing 30 parts by volume of the ethyl cellulose resin, 30 parts by volume of the alumina particles, and 40 parts by volume of the polyethylene resin particles. A second ink for second layer formation was obtained by mixing 60 parts by volume of the ethyl cellulose and 40 parts by volume of the polyethylene resin particles. The thicknesses of the first layer and the second layer were set to be the same. The total thickness of the spacer layer (height of the protrusions) was 35 µm.

When a cross-section of the separator along the spacer layer was formed, and the area ratios of the fillers were evaluated by analyzing its SEM cross-sectional image, it was found that the area ratio R₁ of the filler in the first layer was 0.85, and the area ratio R₂ of the filler in the second layer was 0.3. The ratio R₁/R₂ was accordingly 2.8.

In Example 4, a first ink for first layer formation was obtained by mixing 40 parts by volume of the ethyl cellulose resin, 30 parts by volume of the alumina particles, and 30 parts by volume of the polyethylene resin particles. A second ink for second layer formation was obtained by mixing 30 parts by volume of the ethyl cellulose and 70 parts by volume of the polyethylene resin particles. The thicknesses of the first layer and the second layer were set to be the same. The total thickness of the spacer layer (height of the protrusions) was 40 µm.

When a cross-section of the separator along the spacer layer was formed, and the area ratios of the fillers were evaluated by analyzing its SEM cross-sectional image, it was found that the area ratio R₁ of the filler in the first layer was 0.72, and the area ratio R₂ of the filler in the second layer was 0.7. The ratio R₁/R₂ was accordingly 1.03.

In Example 5, a first ink for first layer formation was obtained by mixing 30 parts by volume of the ethyl cellulose resin, 40 parts by volume of the alumina particles, and 30 parts by volume of the polyethylene resin particles. A second ink for second layer formation was obtained by mixing 60 parts by volume of the ethyl cellulose and 40 parts by volume of the polyethylene resin particles. The thicknesses of the first layer and the second layer were set to be the same. The total thickness of the spacer layer (height of the protrusions) was 30 µm.

When a cross-section of the separator along the spacer layer was formed, and the area ratios of the fillers were evaluated by analyzing its SEM cross-sectional image, it was found that the area ratio R₁ of the filler in the first layer was 0.85, and the area ratio R₂ of the filler in the second layer was 0.2. The ratio R₁/R₂ was accordingly 4.25.

In Comparative Example 1, a first ink for first layer formation was obtained by mixing 40 parts by volume of the ethyl cellulose resin, 5 parts by volume of the alumina particles, and 55 parts by volume of the polyethylene resin particles. A second ink for second layer formation was obtained by mixing 40 parts by volume of the ethyl cellulose and 60 parts by volume of the polyethylene resin particles. The thicknesses of the first layer and the second layer were set to be the same. The total thickness of the spacer layer (height of the protrusions) was 40 µm.

When a cross-section of the separator along the spacer layer was formed, and the area ratios of the fillers were evaluated by analyzing its SEM cross-sectional image, it was found that the area ratio R₁ of the filler in the first layer and the area ratio R₂ of the filler in the second layer were each 0.7. The ratio R₁/R₂ was accordingly 1.0.

In Comparative Example 2, a first ink for first layer formation was obtained by mixing 35 parts by volume of the ethyl cellulose resin, 5 parts by volume of the alumina particles, and 60 parts by volume of the polyethylene resin particles. A second ink for second layer formation was obtained by mixing 20 parts by volume of the ethyl cellulose and 80 parts by volume of the polyethylene resin particles. The thicknesses of the first layer and the second layer were set to be the same. The total thickness of the spacer layer (height of the protrusions) was 40 µm.

In Comparative Example 3, a first ink for first layer formation was obtained by mixing 90 parts by volume of the ethyl cellulose resin and 10 parts by volume of the alumina particles. A second ink for second layer formation (the same as the first ink) was obtained by mixing 90 parts by volume of the ethyl cellulose and 10 parts by volume of the polyethylene resin particles. The thicknesses of the first layer and the second layer were set to be the same. The total thickness of the spacer layer (height of the protrusions) was 20 µm.

When a cross-section of the separator along the spacer layer was formed, and the area ratios of the fillers were evaluated by analyzing its SEM cross-sectional image, it was found that the area ratio R₁ of the filler in the first layer and the area ratio R₂ of the filler in the second layer were each 0.1. The ratio R₁/R₂ was accordingly 1.0.

### [Evaluation 1]

Each of the obtained batteries was subjected to a charge-discharge test. In the charge-discharge test, charging was performed on the battery in a thermostatic bath at 25°C under the following conditions. After 20-minute pause then, discharging was performed under the following conditions.

### (Charging)

Constant current charging was performed at a current of 2.15 mA per unit electrode area (square centimeter) until the battery voltage reached 4.1 V, and constant voltage charging was performed then at a voltage of 4.1 V until the current per unit electrode area reached 0.54 mA.

### (Discharging)

Constant current discharging was performed at a current of 2.15 mA per unit electrode area (square centimeter) until the battery voltage reached 3.75 V.

A set of the above charging and discharging was defined as one cycle, and the charge-discharge cycles were repeated. The percentage (%) of the discharge capacity at the 200th cycle to the discharge capacity at the first cycle was determined as a capacity retention rate.

### [Evaluation 2]

With respect to each of the separators used in the respective secondary batteries, the permeation depth of the resin from the spacer layer to the separator substrate was measured based on the SEM cross-sectional image of the separator taken along the spacer layer. Further, it was visually confirmed whether wrinkles were formed on the separator in the vicinity of the spacer layer provided on the surface of the separator substrate.

The evaluation results are shown in Table 1 and Table 2.

**[Table 1]**

| Battery | Area ratio R₁ of first layer (lower layer) filler | Area ratio R₂ of second layer (upper layer) filler | R₁/R₂ | Total thickness of spacer layer (µm) |
|---|---|---|---|---|
| A1 | 0.7 | 0.55 | 1.27 | 40 |
| A2 | 0.75 | 0.7 | 1.07 | 40 |
| A3 | 0.85 | 0.3 | 2.8 | 35 |
| A4 | 0.72 | 0.7 | 1.03 | 40 |
| A5 | 0.85 | 0.2 | 4.25 | 30 |
| B1 | 0.7 | 0.7 | 1 | 40 |
| B2 | 0.65 | 0.8 | 0.81 | 40 |
| B3 | 0.1 | 0.1 | 1 | 20 |

**[Table 2]**

| Battery | Resin permeation thickness (µm) | Presence or absence of wrinkles | Capacity retention rate (%) |
|---|---|---|---|
| A1 | 0.3 | Absent | 95 |
| A2 | 0.3 | Absent | 94 |
| A3 | 1 | Absent | 91 |
| A4 | 2 | Absent | 87 |
| A5 | 1 | Absent | 87 |
| B1 | 3 | Present | 85 |
| B2 | 3.5 | Present | 82 |
| B3 | 5 | Present | 70 |

It was found from Table 1 and Table 2 that no wrinkles were formed on the separator and a decrease in capacity retention rate was suppressed in the batteries A1 to A5 using the separator in which the area ratio R₁ of the filler in the first layer was set larger than the area ratio R₂ of the filler in the second layer in the spacer layer.

### [Industrial Applicability]

The lithium secondary battery of the present disclosure can be used in electronic devices such as mobile phones, smart phones, and tablet terminals, electric vehicles including hybrid electric vehicles and plug-in hybrid electric vehicles, and household storage batteries combined with solar batteries, for example.

Although the present invention has been described in terms of the presently preferred embodiments, it is to be understood that such a disclosure is not to be interpreted as limiting. Various alterations and modifications will no doubt become apparent to those skilled in the art to which the present invention pertains, after having read the above disclosure. Accordingly, it is intended that the appended claims be interpreted to cover all alterations and modifications as fall within the true spirit and scope of the invention.

### [Reference Signs List]

10 Lithium secondary battery
   14 Electrode group
   15 Case main body
   16 Sealing body
   17, 18 Insulation plate
   19 Positive electrode lead
   20 Negative electrode lead
   21 Step
   22 Filter
   23 Lower valve body
   24 Insulating member
   25 Upper valve body
   26 Cap
   27 Gasket
100 Electrode
   110 Positive electrode
      111 Positive electrode current collector
      112 Positive electrode mixture layer
   120 Negative electrode
   121 Negative electrode current collector
300 Separator
   301 Base layer
   400 Spacer layer
      400A First layer
      400B Second layer
      401, 401a, 401b, 401c, 402, 402a, 402b, 402c Line-shaped protrusion
      410 Resin
      411 First filler
      412 Second filler

## Claims

1. A lithium secondary battery comprising:
a positive electrode; a negative electrode facing the positive electrode; a separator provided between the positive electrode and the negative electrode, and a nonaqueous electrolyte,
wherein in the negative electrode, lithium metal is deposited during charging, and the lithium metal is dissolved during discharging,
the separator has a first main surface,
the secondary battery further comprises a spacer layer provided on the first main surface of the separator,
the spacer layer contains a resin and a filler,
the spacer layer includes a first layer provided closest to the first main surface in a height direction intersecting the first main surface, and a second layer in contact with the first layer in the height direction, and
a ratio R₁/R₂ is greater than 1, where R₁ represents an area ratio of the filler contained in the first layer, and R₂ represents an area ratio of the filler contained in the second layer, both calculated based on a cross-section of the spacer layer taken along the height direction.

2. The lithium secondary battery according to claim 1,
wherein the ratio R₁/R₂ is greater than 1 and 10 or less.

3. The lithium secondary battery according to claim 2,
wherein the ratio R₁/R₂ is 1.03 or more and 4.25 or less.

4. The lithium secondary battery according to claim 3,
wherein the ratio R₁/R₂ is 1.07 or more and 2.8 or less.

5. The lithium secondary battery according to any one of claims 1 to 4,
wherein R₁ is 0.7 or more and 0.85 or less.

6. The lithium secondary battery according to any of claims 1 to 4,
wherein R₂ is 0.3 or more and 0.8 or less.

7. The lithium secondary battery according to any of claims 1 to 4,
wherein the filler includes a first filler having an average particle diameter of less than 1 µm and a second filler having an average particle diameter of 1 to 10 µm.

8. The lithium secondary battery according to claim 7,
wherein in the cross-section, an area ratio of the first filler to a sum of the first filler and the second filler contained in the first layer is larger than an area ratio of the first filler to a sum of the first filler and the second filler contained in the second layer.

9. The lithium secondary battery according to any of claims 1 to 4,
wherein where T represents a thickness of the spacer layer in the height direction, a thickness of the first layer is not less than a smaller one of 2 µm and 0.05T.

10. A composite member comprising:
a separator having a first main surface; and a spacer layer provided on the first main surface of the separator,
wherein the spacer layer contains a resin and a filler,
the spacer layer includes a first layer provided closest to the first main surface in a height direction intersecting the first main surface, and a second layer in contact with the first layer in the height direction, and
a ratio R₁/R₂ is greater than 1, where R₁ represents an area ratio of the filler contained in the first layer, and R₂ represents an area ratio of the filler contained in the second layer, both calculated based on a cross-section of the spacer layer taken along the height direction.

11. The composite member according to claim 10,
wherein the ratio R₁/R₂ is greater than 1 and 10 or less.

12. The composite member according to claim 11,
wherein the ratio R₁/R₂ is 1.03 or more and 4.25 or less.

13. The composite member according to claim 12,
wherein the ratio R₁/R₂ is 1.07 or more and 2.8 or less.

14. The composite member according to any of claims 10 to 13,
wherein the filler includes a first filler having an average particle diameter of less than 1 µm and a second filler having an average particle diameter of 1 to 10 µm.

15. The composite member according to claim 14,
wherein in the cross-section, an area ratio of the first filler to a sum of the first filler and the second filler contained in the first layer is larger than an area ratio of the first filler to a sum of the first filler and the second filler contained in the second layer.
